# EUROPÄISCHE PATENTSCHRIFT

(11) **EP 3 512 661 B1**
(45) Veröffentlichungstag und Bekanntmachung des Hinweises auf die Patenterteilung: **21.10.2020**
(21) Anmeldenummer: 17808783.9
(22) Anmeldetag: 08.11.2017
(51) Int. Cl.: B23K 26/03, B23P 6/00, B23K 26/342, B23K 26/082, B33Y 50/02, B29C 64/393, B29C 64/245, B23Q 17/22, B23Q 17/24, B23Q 35/128

(54) **VERFAHREN ZUR POSITIONSBESTIMMUNG EINER BAUPLATTFORM FÜR DIE ADDITIVE HERSTELLUNG MIT KENNZEICHNUNG DER BAUPLATTFORM DURCH REFERENZPUNKTE**
METHOD OF DETERMINING THE POSITION OF A PLATFORM FOR AN ADDITIVE MANUFACTURE HAVING A PROCESS OF MARKING OF THE CONSTRUCTION PLATFORM WITH REFERENCE POINTS
PROCÉDÉ DE DETERMINATION DE LA POSITION D'UNE PLATEFORME POUR LA FABRICATION ADDITIVE AVEC IDENTIFICATION DE LA PLATEFORME PAR DES POINTS DE RÉFÉRENCE

(30) Priorität: 11.11.2016 DE 102016222210
(43) Veröffentlichungstag der Anmeldung: 24.07.2019
(73) Patentinhaber: Siemens Aktiengesellschaft, 80333 München (DE)
(72) Erfinder: GEISEN, Ole, 10781 Berlin (DE)
(86) Internationale Anmeldenummer: PCT/EP2017/078585
(87) Internationale Veröffentlichungsnummer: WO 2018/087137

(56) Entgegenhaltungen:
- EP-A1- 2 727 709
- WO-A1-2015/163765
- DE-A1- 19 918 613
- DE-A1-102011 052 602
- US-A1- 2007 252 309

## Beschreibung

Die vorliegende Erfindung betrifft ein Verfahren zur Positionsbestimmung einer Bauplattform für die additive Herstellung eines Bauteils gemäß dem Oberbegriff des Anspruchs 1 (siehe z.B. US 2007/252309 A1).

Generative oder additive Herstellungsverfahren umfassen beispielsweise als Pulverbettverfahren das selektive Laserschmelzen (SLM) oder Lasersintern (SLS), oder das Elektronenstrahlschmelzen (EBM). Ebenso gehört das Laserauftragschweißen (LMD) zu den additiven Verfahren.

Ein Verfahren zum selektiven Laserschmelzen ist beispielsweise bekannt aus EP 2 601 006 B1.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Weiterhin ist die additive Fertigung besonders vorteilhaft für die Entwicklung oder Herstellung von Prototypen, welche beispielsweise aus Kostengründen mittels konventioneller subtraktiver oder spanender Verfahren oder Gusstechnologie nicht oder nicht effizient hergestellt werden können.

Im Zuge der zunehmenden industriellen Bedeutung additiver Fertigungsverfahren besteht auch zunehmend ein Bedarf, damit verbundene Verfahrensschritte, d.h. insbesondere vorbereitende Verfahrensschritte und/oder nachbereitete Maßnahmen zu entwickeln, die dazu beitragen, dass ein Aufbau- oder Herstellungsergebnis reproduziert und zuverlässig analysiert werden kann.

Dazu ist es insbesondere erforderlich, während oder in Verbindung mit der additiven Herstellung eines einzelnen Bauteils, beispielsweise eines komplexen Turbinenteils, wie einer von innen kühlbaren Turbinenschaufel, den Aufbauprozess hinsichtlich einer Vielzahl von Parametern zu überwachen und zu dokumentieren. Die genannten Parameter oder Informationenbetreffen nicht nur die unmittelbaren Verfahrensparameter, z.B. physikalische Größen wie die Laserleistung oder die Scangeschwindigkeit, sondern auch beispielsweise Informationen über das Ausgangsmaterial (Ausgangspulver), oder den Zustand oder die Ausrichtung einer Bauplattform. Die Überwachung und Registrierung der genannten Parameter wird umso bedeutender, als dass an die beschriebenen Bauteile besonders hohe Anforderungen hinsichtlich der Fertigungstoleranzen und auch der Mikrostruktur bestehen.

Um den komplexen Parameterraum in der additiven Fertigung zu überblicken und insbesondere den additiven Fertigungsprozess eines metallischen Bauteils, insbesondere eines hochtemperaturbelastbaren Bauteils reproduzierbar(er) zu machen, besteht ein Bedarf, insbesondere Zustand und/oder Position einer Bauplattform möglichst ganzheitlich zu dokumentieren und zu überwachen.

Es ist daher eine Aufgabe der vorliegenden Erfindung, Mittel anzugeben, die eine Lösung zu dem genannten Problem bieten.

Diese Aufgabe wird durch den Gegenstand des unabhängigen Patentanspruchs 1 gelöst. Vorteilhafte Ausgestaltungen sind Gegenstand der abhängigen Patentansprüche.

Ein Aspekt der vorliegenden Erfindung betrifft ein Verfahren zur Positionsbestimmung einer Bauplattform für die additive Herstellung eines Bauteils, umfassend das Kennzeichnen einer Bauplattform oder eines anderen Anlagenteils für die additive Herstellung, umfassend das Versehen eines Kennzeichnungsbereichs oder Referenzbereichs der Bauplattform mit mindestens einem Referenzmerkmal, vorzugsweise einer Mehrzahl von Referenzmerkmalen, insbesondere Referenzpunkten, wobei das (jeweilige) Referenzmerkmal derart angeordnet und ausgebildet wird, dass eine Position des Referenzmerkmals und/oder des Kennzeichnungsbereichs relativ zu einer Referenz, beispielsweise einem Bezugssystem mit mindestens einem weiteren Referenzpunkt, mittels eines optischen Abtastverfahrens, insbesondere Laserscannens, erfasst oder kalibriert werden kann.

Die genannte Position kann vorliegend sowohl beispielsweise die absolute Position eines Bereichs der Bauplattform im Raum als auch eine Orientierung oder Ausrichtung der Bauplattform betreffen. Vorausgesetzt, dass die Referenz selbst an der Plattform angebracht ist, kann über die Kenntnis der relativen Position des (jeweiligen) Referenzmerkmals im Kennzeichnungsbereich zur Referenz, sogar ein Verformungszustand der Plattform registriert werden.

Das Verfahren umfasst weiterhin das optische Abtasten der Bauplattform in dem Kennzeichnungsbereich und das Erfassen der relativen Position anhand der Referenzmerkmale und der Referenz bzw. eines Bezugspunkts bzw. einer entsprechenden Lageinformation.

Es kann, insbesondere während als auch nach der additiven Herstellung, ein Spannungs- oder Verformungszustand der Bauplattform (in-situ) erfasst und dokumentiert werden. Dadurch kann insbesondere die bis heute noch teilweise mangelhafte Prozessreproduzierbarkeit in der pulverbettbasierten additiven Fertigung, entscheidend verbessert werden.

In einer Ausgestaltung umfasst das Verfahren das Versehen des Kennzeichnungsbereichs mit lediglich einem einzigen Referenzmerkmal.

In einer Ausgestaltung wird die Bauplattform pro Kennzeichnungsbereich mit einer Mehrzahl von Referenzmerkmalen versehen. Diese Ausgestaltung erleichtert vorteilhafterweise die Erfassung der relativen Position.

In einer Ausgestaltung werden die Referenzmerkmale gleichartig, insbesondere mit gleichen Dimensionen, ausgebildet. Diese Ausgestaltung erleichtert ebenfalls vorteilhafterweise die Erfassung der relativen Position durch optische Methoden.

In einer Ausgestaltung stellen die Referenzmerkmale, vorzugsweise alle, Referenzpunkte dar und sind gleichartig, insbesondere mit gleichen Dimensionen, Abmessungen oder Durchmessern ausgebildet. Diese Ausgestaltung vereinfacht die optische Abtastung und Registrierung der Referenzpunkte, um deren relative Position beispielsweise mittels optischer Bilderkennungsverfahren zu erfassen.

Gemäß der Erfindung wird der Kennzeichnungsbereich durch mechanische Bearbeitung mit dem Referenzmerkmal versehen.

In einer Ausgestaltung wird die Bauplattform mit einem hochpräzisen Bohr- oder Fräswerkzeug, beispielsweise einer mehrachsigen CNC Fräse, mit den Referenzmerkmalen versehen.

Im Zusammenhang mit einer dieser Ausgestaltungen ist weiterhin die Form der Referenzmerkmale als Punkte besonders zweckmäßig. Mit anderen Worten werden die Referenzmerkmale in Form von Ausnehmungen oder Löchern mittels der genannten Mittel in die Bauplattform gefräst oder gebohrt. Diese Ausgestaltung ermöglicht insbesondere eine einfache und zuverlässige Detektierbarkeit der Position oder Lage der Referenzpunkte. Außerdem kann die Bauplattform auf diese Weise besonders nachhaltig mit den Referenzpunkten versehen werden.

Gemäß der Erfindung ist die Referenz durch eine von der Bauplattform separate (Bezugs-)Einrichtung gegeben oder bereitgestellt, welche in oder an eine Anlage für die additive Herstellung des Bauteils eingerichtet sein kann. Diese Einrichtung kann ebenfalls mit Referenzmerkmalen versehen sein und im Rahmen des beschriebenen Verfahrens optisch abgetastet werden.

In einer Ausgestaltung erlaubt die relative Position eine Information über die Ausrichtung der Bauplattform im Raum, beispielsweise in einem Herstellungsraum für die additive Herstellung.

Beispielsweise kann ein Teil einer additiven Herstellungsanlage diesbezüglich als Referenz oder Referenzpunkt dienen. Diese Ausgestaltung macht es überhaupt erst möglich, die absolute Lage oder Position der Bauplattform im Raum festzustellen. Abhängig vom Abstand der Referenzpunkte zur Referenz kann die genannte relative Position mit einer entsprechenden Genauigkeit detektiert werden.

In einer Ausgestaltung wird die Referenz durch einen von dem Kennzeichnungsbereich beabstandeten (Kennzeichnungs-)Bereich der Bauplattform gegeben oder bereitgestellt, welcher ebenfalls mit mindestens einem Referenzmerkmal versehen ist und optisch abgetastet wird. Gemäß dieser Ausgestaltung bildet die Position des Referenzmerkmals - relativ zu einem Referenzmerkmal des beabstandeten (Kennzeichnungs-)Bereichs der Bauplattform - einen Spannungszustand der Plattform ab, da die entsprechende Spannung oder Verformung eine Veränderung des Abstands der in Rede stehenden Referenzmerkmale bewirkt.

In einer Ausgestaltung erlaubt die relative Position eine Information über den Spannungs- und/oder Verformungszustand der Bauplattform.

In einer Ausgestaltung erlaubt die relative Position eine Information über die Ausrichtung der Bauplattform im Raum. Diese Ausgestaltung ermöglicht mit Vorteil eine genaue initiale Ausrichtung der Bauplattform vor dem eigentlichen Aufbauprozess sowie eine Kalibrierung der Bauplattform relativ zu einer Belichtungseinheit für den Aufbauprozess, beispielsweise einer Belichtungseinheit der entsprechenden Herstellungsanlage.

In einer Ausgestaltung umfasst das Verfahren das optische Abtasten der Bauplattform zum Erfassen der relativen Position während der additiven Herstellung oder des additiven Aufbaus des (auf der Bauplattform herzustellenden) Bauteils. Durch diese Ausgestaltung kann insbesondere ein Spannungszustand während der additiven Herstellung durch die optische Abtastung der Lage der Referenzpunkte überwacht werden.

In einer Ausgestaltung umfasst das Verfahren das optische Abtasten der Bauplattform zum Erfassen der relativen Position nach einer Wärmebehandlung des auf der Bauplattform aufgebauten Bauteils. Durch diese Ausgestaltung kann insbesondere ein entsprechender Spannungszustand der Bauplattform mittels des optischen Abtastens erfasst und beispielsweise mit einem vorherig detektierten Spannungszustand während eines anderen Verfahrensstadiums verglichen werden.

In einer Ausgestaltung umfasst das Verfahren das optische Abtasten der Bauplattform zum Erfassen der relativen Position nach dem Ablösen des additiv aufgebauten oder hergestellten Bauteils von der Bauplattform. Durch diese Ausgestaltung kann ebenfalls eine Qualitätskontrolle ermöglicht werden, welche den Zustand der Bauplattform sogar noch nach der Herstellung des Bauteils wie beschrieben, erfasst.

In einer Ausgestaltung umfasst das Verfahren das Vergleichen eines Ergebnisses des optischen Abtastens der Bauplattform, beispielsweise hinsichtlich des Spannungs- und/oder Verformungszustands, mit einem Ausgangszustand der Bauplattform. Der Ausgangszustand bezeichnet vorzugsweise einen Zustand der Bauplattform unter Standard Druck- und Temperaturbedingungen, beispielsweise bei Raumtemperatur vor einem additiven Herstellungsprozess.

In einer Ausgestaltung umfasst das Verfahren das Versehen der Bauplattform mit einem Code, beispielsweise einem Strich- und/oder QR-Code. Demgemäß kann durch diesen zusätzlichen Verfahrensschritt die Bauplattform weiterhin indiziert und registriert werden, sodass diese zuverlässig auch noch nach einem Aufbauprozess einer bereits hergestellten Komponente zugeordnet werden kann. Dabei können die Vorteile, welche bekannterweise ein QR-Code bietet, für die Registrierung der Bauplattform genutzt werden.

In einer Ausgestaltung ist das optische Abtastverfahren ein Laserscanverfahren, beispielsweise umfassend eine Hardware zum Streifenlicht-Scannen der Bauplattform, eine Software für die 3D Form- und Maßanalyse und/oder die 3D Analyse von computergestützten Daten.

Ein weiterer Aspekt der vorliegenden Erfindung betrifft eine Anlage für die additive Herstellung des Bauteils umfassend eine Einrichtung, welche zum Durchführen des beschriebenen Verfahrens eingerichtet ist.

Merkmale, Ausgestaltungen oder Vorteile, die vorliegend anhand des Verfahrens beschrieben werden, können sich entsprechend ebenfalls auf die Vorrichtung beziehen, und umgekehrt.

Weitere Einzelheiten der Erfindung werden nachfolgend anhand der Figuren beschrieben.
- Figur 1: zeigt ein schematisches Flussdiagramm, welches Verfahrensschritte des erfindungsgemäßen Verfahrens andeutet.
- Figur 2: zeigt eine schematische Schnittansicht einer Bauplattform mit erfindungsgemäßen Referenzmerkmalen.
- Figur 3: zeigt jeweils eine schematische Schnittansicht einer Bauplattform in verschiedenen Zuständen mit erfindungsgemäßen Referenzmerkmalen an.
- Figur 4: zeigt schematisch eine Aufsicht einer Bauplattform, welche mittels einer Abtastvorrichtung abgetastet wird.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

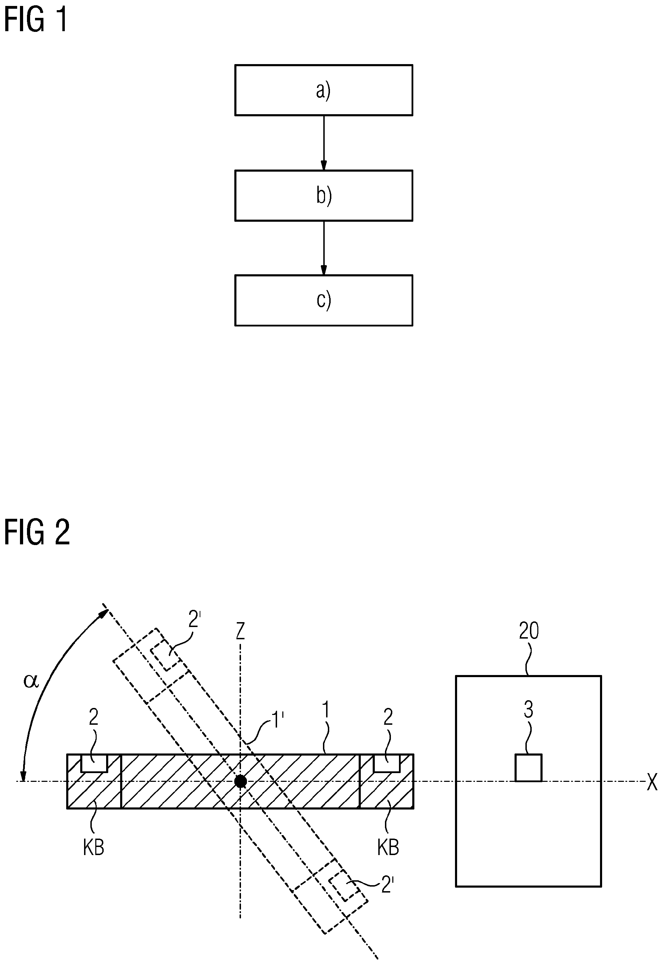

Figur 1 deutet mit dem Verfahrensschritt a) gemäß dem beschriebenen Verfahren das Kennzeichnen einer Bauplattform 1 (vergleiche Figur 2) für die additive Herstellung an, umfassend das Versehen eines Kennzeichnungsbereichs der Bauplattform mit Referenzmerkmalen.

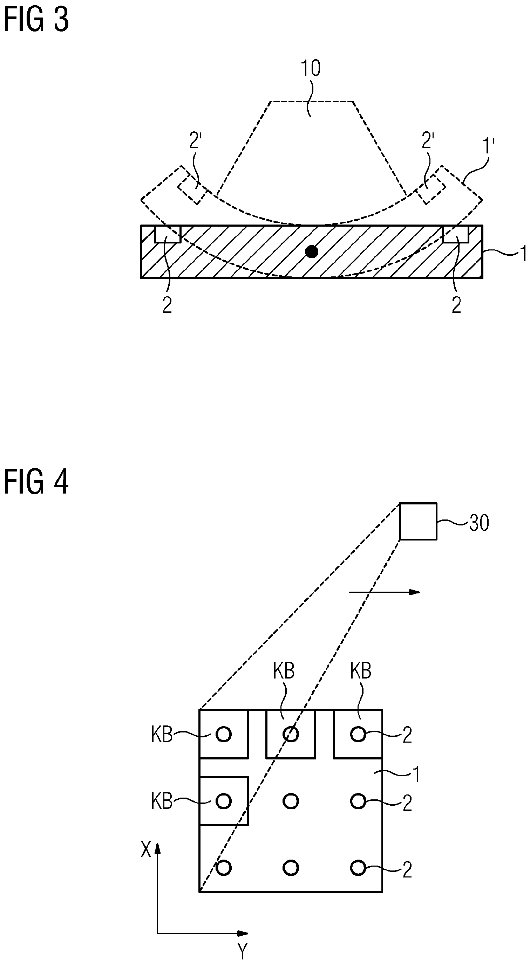

Der in Figur 1 angedeutete Verfahrensschritt b) deutet das optische Abtasten der Bauplattform in dem Kennzeichnungsbereich an (vgl. Figur 4).

Der in Figur 1 angedeutete Verfahrensschritt c) deutet das Erfassen einer Position der Referenzmerkmale relativ zu einer Referenz an.

Anhand der Figuren 2 bis 4 wird im Folgenden das erfindungsgemäße Verfahren im Detail beschrieben.

Figur 2 zeigt eine schematische Schnittansicht einer Bauplattform 1. Zur Vereinfachung der Darstellung der Verfahrensschritte ist die Bauplattform 1 in ein kartesisches Koordinatensystem, umfassend die Raumachsen X und Z eingezeichnet. Ein Mittelpunkt der Bauplattform 1 ist dabei in einem Koordinatenursprung des Koordinatensystems (0,0) eingezeichnet.

Die Bauplattform 1 ist an horizontalen Seiten jeweils mit einem Referenzmerkmal 2 versehen worden (siehe oben). Vorzugsweise werden die genannten Referenzmerkmale mittels einer Präzisionsfräse in die Struktur der Bauplattform 1 gefräst, um nachhaltig eine Position der Bauplattform 1 bestimmen zu können. Die Referenzmerkmale können alternativ auch gebohrt werden. Das Fräsen der Referenzmerkmale, insbesondere Referenzpunkte, kann insbesondere durch ein Hochpräzisionswerkzeug durchgeführt werden, um die relative Position besonders genau bestimmen zu können.

Insbesondere ist das Fräsen der Referenzpunkte 2, 2' vergleichbar mit den bei der sogenannten "GOM" verwendeten optischen Referenzmethode.

Insbesondere wurden die Referenzmerkmale jeweils in einem Kennzeichnungsbereich KB des Bauteils angebracht. Die Kennzeichnungsbereich KB kann beispielweise charakteristische Bereiche der Bauplattform kennzeichnen, in denen es besonders zweckmäßig ist, die Referenzmerkmale anzubringen, beispielsweise, um die Position derselben oder die Topografie des Kennzeichnungsbereichs zu erfassen.

Im Rahmen der beschriebenen optischen Abtastung bzw. des Erfassens der relativen Position kann es ausreichend sein, wenn, statt der ganzen Oberfläche der Bauplattform 1 lediglich der (kleinere) Kennzeichnungsbereich KB optisch abgetastet wird (vgl. Figur 3).

Weiterhin ist in Figur 2 in Verlängerung auf der X-Achse eine Einrichtung 20 beschrieben, welche eine Referenz 3 aufweist. Demgemäß bildet die Einrichtung ein : Bezugssystem, anhand dessen mittels des beschriebenen Erfassens, Position, Orientierung und/oder Verformungszustand des jeweiligen Bauteils oder der Plattform bestimmt werden.

Die Referenz selber muss vorzugsweise nicht gesondert optisch abgetastet werden sondern deren Position und Lage im Raum liegt vorzugsweise fest. Bei der Einrichtung 20 handelt es sich um eine Einrichtung einer additiven Herstellungsanlage (vorliegend nicht explizit gekennzeichnet), beispielsweise um einen Punkt oder einen Vektor, welcher mit hinreichender Genauigkeit bestimmt werden kann.

Gestrichelt ist in Figur 2 eine relativ zur durchgezogenen Darstellung der Bauplattform 1 um einen Winkel α angestellte oder gewinkelte Ausrichtung der Bauplattform im Raum, d.h. relativ zu der Referenz angedeutet.

Die Referenzpunkte 2 können insbesondere zur Ausrichtung oder Orientierung der Bauplattform 1 verwendet werden. Vorzugsweise werden die Referenzpunkte 2 gemäß der vorliegenden Erfindung für eine sogenannte Nivellierung, also horizontale Ausrichtung der Bauplattform genutzt, welche bei konventionellen additiven Herstellungsverfahren manuell durchgeführt werden muss.

Die Referenzpunkte 2 können auch verwendet werden, um eine Bestrahlungseinheit oder eine Belichtungseinheit, vorzugsweise ein Laser- oder Elektronenstrahl (vorliegend nicht explizit in den Figuren dargestellt) oder eine entsprechende Einheit relativ zur Bauplattform 1 in der beschriebenen XY-Ebene auszurichten. Dies kann derart erfolgen, dass die tatsächliche, (optisch) gescannte oder abgetastete Geometrie der Referenzmerkmale 2 beispielsweise zu den in eine Steuerung der Belichtungseinrichtung (vorliegend nicht explizit gekennzeichnet) eingelesenen Informationen passt und die Belichtung zuverlässig und reproduzierbar durchgeführt werden kann.

Alternativ oder zusätzlich zu den, beispielsweise mittels einer Fräse oder eines anderen Bearbeitungswerkzeugs, angebrachten Referenzpunkten 2, kann ein Strichcode und/oder ein QR-Code oder ein anderes Referenzmerkmal in die Plattform eingebracht werden.

Die entsprechend erfasste, relative Position der Bauplattform, beispielsweise umfassend XYZ-Koordinaten und/oder einen Winkel einer Längsachse der Bauplattform (vergleiche Winkel α wie oben beschrieben) können im Rahmen des vorliegenden Verfahrens ebenso gespeichert und/oder beispielsweise an eine Maschinensteuerung weitergegeben werden

Figur 3 zeigt eine Ausgestaltung des erfindungsgemäßen Verfahrens, wobei ein Spannungszustand der Bauplattform 1, durch das beschriebene Verfahren erfasst und kontrolliert werden kann. Solche Spannungen können insbesondere beim Laser- oder Elektronenstrahlschmelzen auftreten, wo durch den fokussierten Energiestrahl große Temperaturgradienten und somit mechanische, thermische und/oder thermomechanische Spannungen oder Belastungen im Material entstehen. Diese Spannungen haben Verformungen zur Folge, was durch die gestrichelte Kontur einer gewölbten Bauplattform (vergleiche Bezugszeichen 1') angedeutet ist.

Die Referenzpunkte der verspannten Bauplattform 1' sind analog zur Darstellung der Figur 2 mit dem Bezugszeichen 2' gekennzeichnet. Anhand der erfassten relativen Position der verschiedenen Referenzpunkte 2' an beiden Seiten der Querschnittsdarstellung der Figur 3 lässt sich über das beschriebene Verfahren auf den Spannungszustand der Bauplattform 1' rückschließen (vgl. oben).

Das Verfahren wie es in der Figur 3 beschriebenen ist, kann beispielsweise während der additiven Herstellung, d.h. nach oder zwischen dem Verfestigen einzelner Schichten, nach einer entsprechenden spannungrelaxierenden Wärmebehandlung und/oder nach dem Trennen oder Ablösen eines auf der Bauplattform 1 aufgebauten Bauteils (vergleiche gestrichelte Linien und Bezugszeichen 10 in Figur 3) durchgeführt werden.

Insbesondere kann das Verfahren zusätzlich das Vergleichen eines Ergebnisses des optischen Abtastens der Bauplattform, beispielsweise hinsichtlich des Spannungs- und/oder Verformungszustands während der additiven Herstellung, nach einer Wärmebehandlung bzw. nach dem Ablösen des Bauteils 10 (von der Bauplattform 1) mit einem Ausgangszustand der Bauplattform 1 umfassen.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Nickelbasis-oder Superlegierung, insbesondere einer nickel- oder kobaltbasierten Superlegierung. Die Legierung kann ausscheidungsgehärtet oder ausscheidungshärtbar sein.

Figur 4 zeigt eine schematische Aufsicht auf eine Herstellungsfläche der Bauplattform 1, die XY-Fläche. Es ist zu erkennen, dass eine Mehrzahl von Referenzmerkmalen, insbesondere Referenzpunkten 2 in entsprechenden, diese umschließenden Kennzeichnungsbereichen, angeordnet sind. Die Referenzpunkte sind insbesondere gleichartig ausgebildet, mit gleichen Dimensionen oder Durchmessern. Pro Kennzeichnungsbereich KB ist die Bauplattform 1 mit einem Referenzmerkmal 2 versehen. Alternativ dazu, kann die Bauplattform 1 pro Kennzeichnungsbereich KB mit einer Mehrzahl von Referenzmerkmalen 2 versehen werden. Durch die Vielzahl der Referenzpunkte (vgl. neun regelmäßig angeordnete Referenzpunkte in Figur 4), kann der Zustand bzw. die Position der Plattform besonders genau bestimmt werden.

Weiterhin in Figur 4 ist eine optische Abtastvorrichtung 30 gezeigt, beispielsweise umfassend einen Streifenlicht-Scanner, mit welchem die relative Position jedes einzelnen Referenzpunktes, schnell und zuverlässig erfasst werden kann. Dies kann - wie oben beschrieben - anhand einer hier nicht gezeigten Referenz 3 erfolgen.

Das Abtastverfahren wie Figur 3 gezeigt, kann beispielweise vor dem Beginn eines Herstellungsprozesses (vergleiche Figur 4) durchgeführt werden, um den Ausgangszustand der Bauplattform 1 festzuhalten oder zu registrieren.

## Patentansprüche

1. Verfahren zur Positionsbestimmung einer Bauplattform (1, 1') für die additive Herstellung eines Bauteils (10) **gekennzeichnet durch** die folgenden Schritte:
- Kennzeichnen einer Bauplattform (1, 1') für die additive Herstellung, umfassend das Versehen eines Kennzeichnungsbereichs (KB) der Bauplattform (1, 1') mit mindestens einem Referenzmerkmal (2, 2') durch mechanische Bearbeitung, wobei das Referenzmerkmal (2) derart angeordnet und ausgebildet wird, dass eine Position des Referenzmerkmals (2) relativ zu einem Bezugspunkt (3) mittels eines optischen Abtastverfahrens erfasst werden kann, wobei der Bezugspunkt (3) durch eine von der Bauplattform (1) separate Einrichtung (20) gegeben ist, welche an oder in einer Anlage für die additive Herstellung eines Bauteils (10) eingerichtet ist, und wobei die relative Position eine Information über die Ausrichtung der Bauplattform (1) im Raum erlaubt,
- optisches Abtasten der Bauplattform (1) in dem Kennzeichnungsbereich (KB), und
- Erfassen der relativen Position anhand des Referenzmerkmals (2) und des Bezugspunkts (3).

2. Verfahren gemäß Anspruch 1, wobei die Bauplattform (1) mit einem hochpräzisen Fräswerkzeug, beispielsweise einer mehrachsigen CNC-Fräse, mit den Referenzmerkmalen (2) versehen wird.

3. Verfahren gemäß Anspruch 1 oder 2, wobei die Bauplattform pro Kennzeichnungsbereich mit einer Mehrzahl von Referenzmerkmalen (2) versehen wird, welche gleichartig, insbesondere mit gleichen Dimensionen, ausgebildet werden.

4. Verfahren gemäß einem der vorhergehenden Ansprüche, wobei der Bezugspunkt (3) durch einen von dem Kennzeichnungsbereich (KB) beabstandeten Bereich der Bauplattform (1) gegeben ist, welcher ebenfalls mit Referenzmerkmalen (2) versehen ist und optisch abgetastet wird, und wobei die relative Position eine Information über die Ausrichtung der Bauplattform (1) im Raum erlaubt.

5. Verfahren gemäß einem der vorhergehenden Ansprüche, wobei der Bezugspunkt (3) durch einen von dem Kennzeichnungsbereich (KB) beabstandeten Bereich der Bauplattform (1) gegeben ist, welcher ebenfalls mit mindestens einem Referenzmerkmal (2, 2') versehen ist und optisch abgetastet wird, und wobei die relative Position eine Information über den Spannungs- und/oder Verformungszustand der Bauplattform (1) erlaubt.

6. Verfahren gemäß Anspruch 5, umfassend das optische Abtasten der Bauplattform (1) zum Erfassen der relativen Position während des additiven Aufbaus des Bauteils (10).

7. Verfahren gemäß Anspruch 5 oder 6, umfassend das optische Abtasten der Bauplattform (1) zum Erfassen der relativen Position nach einer Wärmebehandlung eines auf der Bauplattform (1) aufgebauten Bauteils (10).

8. Verfahren gemäß einem der Ansprüche 5 bis 7, umfassend das optische Abtasten der Bauplattform (1) zum Erfassen der relativen Position nach dem Ablösen des additiv hergestellten Bauteils (10) von der Bauplattform (1).

9. Verfahren gemäß einem der Ansprüche 5 bis 8, umfassend das Vergleichen eines Ergebnisses des optischen Abtastens der Bauplattform (1) hinsichtlich des Spannungs- und/oder Verformungszustands mit einem Ausgangszustand der Bauplattform (10) .

10. Verfahren gemäß einem der vorhergehenden Ansprüche umfassend das Versehen der Bauplattform (1) mit einem Code, beispielsweise mit einem Strich- und/oder QR-Code.

11. Verfahren gemäß einem der vorhergehenden Ansprüche, wobei das optische Abtastverfahren ein Laserscanverfahren ist, beispielsweise umfassend eine Hardware (30) zum Streifenlicht-Scannen der Bauplattform und eine Software für die 3D-Form- und Maßanalyse und/oder die 3D-Analyse von computergestützten Daten.

## Claims

1. Method for determining the position of a construction platform (1, 1') for additive manufacturing of a component (10), **characterized by** the following steps:
- marking a construction platform (1, 1') for additive manufacturing, comprising providing a marking region (KB) of the construction platform (1, 1') with at least one reference feature (2, 2') via mechanical processing, wherein the reference feature (2) is arranged and designed in such a way that a position of the reference feature (2) relative to a reference point (3) can be captured using an optical scanning method, wherein the reference point (3) is provided by a device (20) which is separate from the construction platform (1) and which is installed on or in an arrangement for additive manufacturing of a component (10), and wherein the relative position enables information relating to the alignment of the construction platform (1) in space,
- optically scanning the construction platform (1) in the marking region (KB), and
- capturing the relative position with the aid of the reference feature (2) and the reference point (3).

2. Method according to Claim 1, wherein the construction platform (1) is provided with the reference features (2) by means of a high-precision milling tool, for example a multi-axis CNC milling machine.

3. Method according to Claim 1 or 2, wherein the construction platform is provided with a plurality of reference features (2) for each marking region, which reference features are designed in a similar manner, in particular with the same dimensions.

4. Method according to one of the preceding claims, wherein the reference point (3) is provided by a region of the construction platform (1) which is spaced from the marking region (KB) and which is likewise provided with reference features (2) and is optically scanned, and wherein the relative position enables information relating to the alignment of the construction platform (1) in space.

5. Method according to one of the preceding claims, wherein the reference point (3) is provided by a region of the construction platform (1) which is spaced from the marking region (KB) and which is likewise provided with at least one reference feature (2, 2') and is optically scanned, and wherein the relative position enables information relating to the stress and/or deformation state of the construction platform (1).

6. Method according to Claim 5, comprising optically scanning the construction platform (1) to capture the relative position during the additive construction of the component (10).

7. Method according to Claim 5 or 6, comprising optically scanning the construction platform (1) to capture the relative position after heat-treatment of a component (10) constructed on the construction platform (1).

8. Method according to one of Claims 5 to 7, comprising optically scanning the construction platform (1) to capture the relative position after the removal of the additively manufactured component (10) from the construction platform (1).

9. Method according to one of Claims 5 to 8, comprising comparing an outcome of the optical scanning of the construction platform (1) to a starting state of the construction platform (10) with regard to the stress and/or deformation state.

10. Method according to one of the preceding claims, comprising providing the construction platform (1) with a code, for example with a bar code and/or QR code.

11. Method according to one of the preceding claims, wherein the optical scanning method is a laser scanning method, for example comprising hardware (30) for structured-light scanning of the construction platform and software for 3D form and measurement analysis and/or 3D analysis of computer-based data.

## Revendications

1. Procédé de détermination de la position d'une plateforme (1, 1') pour la fabrication additive d'une pièce (10), **caractérisé par** les stades suivants :
- caractérisation d'une plateforme (1, 1') pour la fabrication additive, comprenant prévoir une partie (KB) de caractérisation de la plateforme (1, 1') ayant au moins une caractéristique (2, 2') de référence par usinage mécanique, la caractéristique (2) de référence étant disposée et constituée de manière à pouvoir détecter une position de la caractéristique (2) de référence par rapport à un point (3) de repère, au moyen d'un procédé de balayage optique, le point (3) de repère étant donné par un dispositif (20) distinct de la plateforme (1), qui est agencé sur ou dans une installation de fabrication additive d'une pièce (10), la position relative permettant d'avoir une information sur l'orientation de la plateforme (1) dans l'espace,
- balayage optique de la plateforme (1) dans la partie (KB) de caractérisation, et
- relevé de la position relative à l'aide de la caractéristique (2) de référence et du point (3) de repère.

2. Procédé suivant la revendication 1, dans lequel on munit la plateforme (1) des caractéristiques (2) de référence par un outil de fraisage de grande précision, par exemple par une fraise CNC à plusieurs axes.

3. Procédé suivant la revendication 1 ou 2, dans lequel on munit la plateforme, par partie de caractérisation, d'une pluralité de caractéristiques (2) de référence, qui sont constituées en étant pareilles, en ayant notamment de mêmes dimensions.

4. Procédé suivant l'une des revendications précédentes, dans lequel le point (3) de repère est donné par une partie de la plateforme (1), qui est à distance de la partie (KB) de caractérisation et qui est pourvue également de caractéristiques (2) de référence et qui est balayée optiquement, et dans lequel la position relative permet d'avoir une information sur l'orientation de la plateforme (1) dans l'espace.

5. Procédé suivant l'une des revendications précédentes, dans lequel le point (3) de repère est donné par une partie de la plateforme (1), qui est à distance de la partie (KB) de caractérisation, qui est pourvue également d'au moins une caractéristique (2, 2') de référence et qui est balayée optiquement et dans lequel la position relative permets d'avoir une information sur l'état de contrainte et/ou de déformation de la plateforme (1).

6. Procédé suivant la revendication 5, comprenant le balayage optique de la plateforme (1) pour relever la position relative pendant la constitution additive de la pièce (10).

7. Procédé suivant la revendication 5 ou 6, comprenant le balayage optique de la plateforme (1) pour le relevé de la position relative après un traitement par la chaleur d'une pièce (10) constituée sur la plateforme (1).

8. Procédé suivant l'une des revendications 5 à 7, comprenant le balayage optique de la plateforme (1) pour le relevé de la position relative après la séparation de la pièce (10), fabriquée additivement, de la plateforme (1).

9. Procédé suivant l'une des revendications 5 à 8, comprenant la comparaison d'un résultat du balayage optique de la plateforme (1) en ce qui concerne l'état de tension et/ou de déformation à un état initial de la plateforme (10).

10. Procédé suivant l'une des revendications précédentes, comprenant munir la plateforme (1) d'un code, par exemple d'un code barre et/ou d'un code QR.

11. Procédé suivant l'une des revendications précédentes, dans lequel le procédé de balayage optique est un procédé de balayage par laser, comprenant, par exemple, une partie (30) matérielle pour le balayage en lumière rasante de la plateforme et une partie de logiciel pour l'analyse de forme et de dimension en 3D et/ou pour l'analyse en 3D de données assistée par ordinateur.
